# EUROPÄISCHE PATENTSCHRIFT

(11) **EP 1 526 633 B1**
(45) Veröffentlichungstag und Bekanntmachung des Hinweises auf die Patenterteilung: **21.09.2011**
(21) Anmeldenummer: 04022544.3
(22) Anmeldetag: 22.09.2004
(51) Int. Cl.: H02M 5/293

(54) **Vorrichtung zum Stellen von Wechselstrom**
Device for providing an alternating current
Circuit fournissant un courant alternatif

(30) Priorität: 21.10.2003 DE 20316088 U
(43) Veröffentlichungstag der Anmeldung: 27.04.2005
(73) Patentinhaber: AEG SVS Power Supply Systems GmbH, 59581 Warstein-Belecke (DE)
(72) Erfinder: Vollmar, Wilfried, 59494 Soest (DE)
(74) Vertreter: Graefe, Jörg

(56) Entgegenhaltungen:
- EP-A- 1 030 436
- WO-A-02/063755
- US-A- 5 635 826
- US-B1- 6 326 773
- ALONSO O ET AL: "Cascaded h-bridge multilevel converter for grid connected photovoltaic generators with independent maximum power point tracking of each solar array" PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003, ANNUAL POWER ELECTRONICS SPECIALISTS CONFERENCE, NEW YORK, NY : IEEE, US, Bd. VOL. 4 OF 4. CONF. 34, 15. Juni 2003 (2003-06-15), Seiten 731-735, XP010648900 ISBN: 0-7803-7754-0

## Beschreibung

Die Erfindung betrifft eine Vorrichtung zum Stellen von Wechselstrom mit einem ersten Spannungsversorgungsmittel, einem zweiten Spannungsversorgungsmittel und einem ersten Leistungssteller, wobei die Ausgänge des ersten Spannungsversorgungsmittels und des zweiten Spannungsversorgungsmittels in Reihe geschaltet sind.

Aus der Offenlegungsschrift mit der Veröffentlichungsnummer DE 101 60 361 A1 ist eine Vorrichtung zum Stellen von Wechselstrom bekannt, bei dem ein Leistungssteller die gesamte am Ausgang anfallende Spannung entsprechend der gewünschten Ausgangsspannung stellt. D. h., der gesamte Strom, der am Ausgang der Vorrichtung zur Verfügung gestellt wird, fließt durch den in der Vorrichtung vorgesehenen Leistungssteller. Dieses erfordert eine ausreichende Dimensionierung der Bauelemente des Leistungsstellers und gegebenenfalls eines dem Leistungssteller der Vorrichtung vorgeschalteten Netzfilters. Dieses kann je nach Größe der maximal zu liefernden Ströme beziehungsweise Spannungen dazu führen, dass verhältnismäßig teure Bauelemente für den Leistungssteller und den Netzfilter verwendet werden müssen. In der Regel sind nämlich Bauelemente, die für hohe Ströme und für hohe Spannungen ausgelegt sind, teurer als die Bauelemente, die für kleinere Ströme und Spannungen vorgesehen sind.

Aus dem Stand der Technik ist es ferner allgemein bekannt, als Spannungsversorgungsmittel dienende Quellen zum Beispiel Batterien in Reihe zu schalten, um höhere Spannungen am Ausgang der gesamten Schaltung zur Verfügung zu stellen.

Aus der Patentschrift US 6 326 773 B1 (siehe dort Fig. 6) ist eine Vorrichtung zum Stellen von Wechselstrom bekannt, die zwei Spannungsversorgungsmittel aufweist, deren Ausgänge in Reihe geschaltet sind. Durch Schalten kann die Amplitude einer Ausgangsspannung der Spannungsversorgungsmittel geändert werden.

Aus der internationalen Patentanmeldung WO 02/63755 A1 ist sogar eine Vorrichtung zum Stellen von Wechselstrom bekannt, bei der die Ausgänge mehrerer Spannungsversorgungsmittel in Reihe geschaltet sind. Jedes Spannungsversorgungsmittel kann dabei unabhängig von den anderen eine Ausgangsspannung bereitstellen. Die Ausgangsspannungen können auch eine andere Wellenform haben.

Der Erfindung liegt nun die Aufgabe zugrunde, eine Vorrichtung der eingangs genannten Art vorzuschlagen, welche geeignet ist, hohe Ströme und hohe Spannungen zu liefern, wobei jedoch möglichst Bauelemente verwendet werden sollen, die für geringere Ströme und Spannungen ausgelegt sind.

Diese Aufgabe wird erfindungsgemäß durch eine Vorrichtung gemäß Anspruch 1 gelöst. Bei einer erfindungsgemäßen Vorrichtung weist demgemäß das zweite Spannungsversorgungsmittel zumindest den ersten Leistungssteller zum Einstellen der Spannung am Ausgang der Vorrichtung auf. Durch das erste Spannungsversorgungsmittel der erfindungsgemäßen Vorrichtung wird ein fester Anteil der Ausgangsspannung der Vorrichtung geliefert. Durch das zweite Spannungsversorgungsmittel wird dagegen ein variabler Anteil der Ausgangsspannung zur Verfügung gestellt. Nur dieser variable Anteil wird durch Schalten des Leistungsstellers erzeugt. Der feste Anteil, der in der Regel der größere Anteil sein dürfte, muss dagegen nicht geschaltet werden. Für den ersten Leistungssteller des zweiten Spannungsversorgungsmittels können daher Bauelemente verwendet werden, die eine geringere Dimensionierung aufweisen als bei einer Vorrichtung zum Stellen von Wechselströmen, wie sie aus der genannten Druckschrift bekannt ist.

Das erste Spannungsversorgungsmittel umfasst einen Transformator. Die Primärseite des Transformators des ersten Spannungsversorgungsmittels ist gemäß der Erfindung zumindest mittelbar mit dem Eingang der Vorrichtung verbunden. Durch diesen Transformator kann beispielsweise eine galvanische Trennung der Eingangsseite und der Ausgangsseite der Vorrichtung erreicht werden.

Auch das Spannungsversorgungsmittel kann einen Transformator umfassen. Auch durch diesen Transformator kann eine galvanische Trennung der Eingangsseite und der Ausgangsseite der Vorrichtung erreicht werden.

Die Sekundärseite der Transformatoren ist vorzugsweise mit den jeweiligen Ausgängen der Spannungsversorgungsmittel verbunden.

Ein erster Anschluss und ein zweiter Anschluss der Primärseite des Transformators des zweiten Spannungsversorgungsmittels sind vorteilhaft hingegen mit einem ersten und einem zweiten Anschluss des Ausgangs des ersten Leistungsstellers verbunden.

Eine erfindungsgemäße Vorrichtung kann im Übrigen ein Schaltmittel zum Umpolen der Verbindung zwischen der Primärseite des Transformators des zweiten Spannungsversorgungsmittels und dem Ausgang des ersten Leistungsstellers umfassen. Durch diese Schaltmittel zum Umpolen kann die Richtung der Ausgangsspannung des zweiten Spannungsversorgungsmittels im Bezug auf die Ausgangsspannung des ersten Spannungsversorgungsmittels gedreht werden. Es ist damit möglich, einen Stellbereich auszuwählen, bei dem die maximale Ausgangsspannung der Vorrichtung der Ausgangsspannung des ersten Spannungsversorgungsmittels entspricht oder aber die minimale Spannung der Vorrichtung der Ausgangsspannung des ersten Spannungsversorgungsmittels entspricht.

Erfindungsgemäß kann der Eingang des ersten Leistungsstellers mit dem Eingang der Vorrichtung verbunden sein. Zwischen dem Eingang des ersten Leistungsstellers und dem Eingang der Vorrichtung kann aber auch ein Netzfilter geschaltet sein.

Bei einer erfindungsgemäßen Vorrichtung kann das erste Spannungsversorgungsmittel ein erstes Schaltmittel aufweisen, mit welchem die Primärseite des Transformators des ersten Spannungsversorgungsmittels stromlos geschaltet werden kann. Ferner ist es möglich, dass das erste Spannungsversorgungsmittel ein zweites Schaltmittel aufweist, mit welchem die Primärseite des Transformators des ersten Spannungsversorgungsmittels kurzgeschlossen werden kann. Es ist damit möglich, durch das erste oder das zweite Schaltmittel zu erreichen, dass das erste Spannungsversorgungsmittel keine Ausgangsspannung beziehungsweise eine Nullspannung als Ausgangsspannung liefert. Die am Ausgang der Vorrichtung zur Verfügung gestellte Spannung wird dann ausschließlich durch das zweite Spannungsversorgungsmittel zur Verfügung gestellt. Dadurch kann der Stellbereich der erfindungsgemäßen Vorrichtung vergrößert werden.

Gemäß der Erfindung kann das zweite Spannungsversorgungsmittel einen zweiten Leistungssteller aufweisen. Der Eingang des zweiten Leistungsstellers ist dann vorzugsweise mit dem Ausgang des Netzfilters verbunden.

Vorteilhaft ist der Eingang des zweiten Leistungsstellers im umgekehrten Sinn wie der Eingang des ersten Leistungsstellers gepolt. Am Ausgang des zweiten Leistungsstellers kann dadurch eine Spannung zur Verfügung gestellt werden, die um 180° phasenverschoben gegenüber der Ausgangsspannung des ersten Leistungsstellers ist. Auch durch diese Maßnahme kann der Stellbereich der ersten Vorrichtung vergrößert werden.

Die Anschlüsse des Ausgangs des zweiten Leistungsstellers können gemäß der Erfindung mit dem zweiten Anschluss und einem dritten Anschluss der Primärseite des Transformators des zweiten Spannungsversorgungsmittels verbunden sein. Der zweite Anschluss der Primärseite des Transformators des zweiten Spannungsversorgungsmittels kann dabei eine Mittelanzapfung dieses Transformators sein. Der erste Anschluss und der dritte Anschluss des Transformators des zweiten Spannungsversorgungsmittels bilden dann vorteilhaft äußere Anzapfungen dieses Transformators. Der Transformator des zweiten Spannungsversorgungsmittels kann durch diese Art der Beschaltung primärseitig mit einer positiven oder mit einer negativen Spannung beaufschlagt werden, je nachdem welcher der Leistungssteller betrieben wird. Entsprechend wird am Ausgang des zweiten Spannungsversorgungsmittels eine positive oder negative Ausgangsspannung in Bezug auf die Ausgangsspannung des ersten Spannungsversorgungsmittels zur Verfügung gestellt. Dieses führt zu einem Stellbereich, der um den Wert der Ausgangsspannung des ersten Spannungsversorgungsmittels liegen kann.

Gemäß der Erfindung ist der Stellbereich des ersten Leistungsstellers vorteilhaft 0 bis 50 % der Ausgangsspannung des ersten Spannungsversorgungsmittels. Dagegen ist der Stellbereich des zweiten Leistungsstellers vorteilhaft -50 bis 0 % der Ausgangsspannung des ersten Spannungsversorgungsmittels. Am Ausgang der Vorrichtung kann dann eine Spannung zur Verfügung gestellt werden, der 0 bis 100 % der maximalen Ausgangsspannung der Vorrichtung umfasst.

Zwei Ausführungsbeispiele für eine erfindungsgemäße Vorrichtung sind in der Zeichnung näher beschrieben. Darin zeigt
- Fig. 1: ein Ausführungsbeispiel einer erfindungsgemäßen Vorrichtung mit einem kleinen Stellbereich und
- Fig. 2: ein Ausführungsbeispiel für eine erfindungsgemäße Vorrichtung mit einem großen Stellbereich.

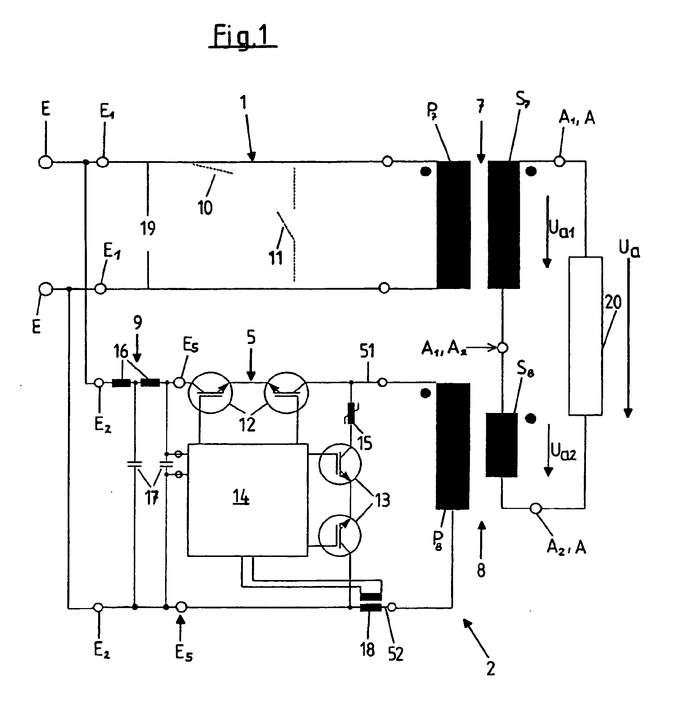

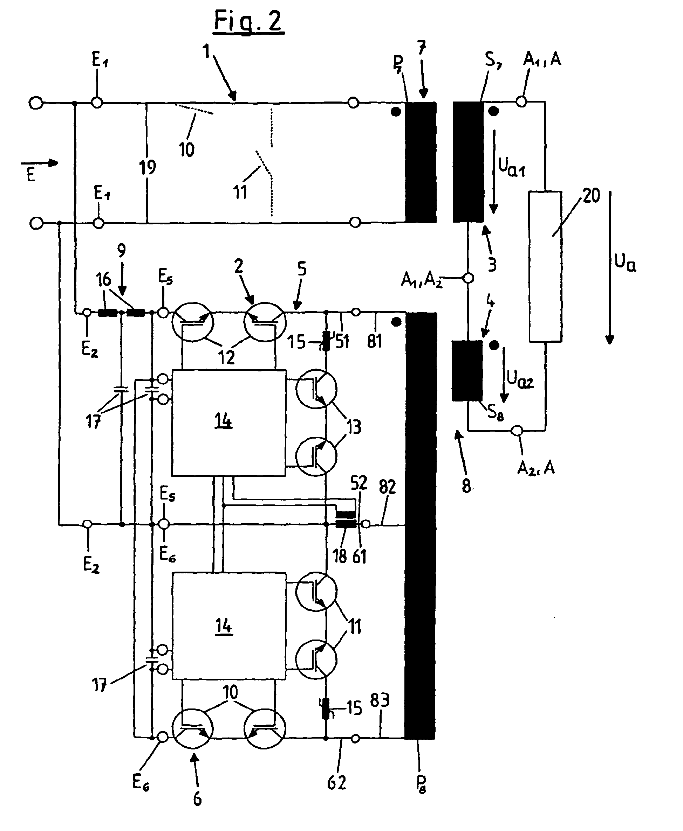

Die in den beiden Fig. 1 und 2 dargestellten Ausführungsbeispiele sind in vielen Einzelheiten identisch. Daher sind gleiche Merkmale mit gleichen Bezugszeichen versehen.

Das in Fig. 1 dargestellte Ausführungsbeispiel weist ein erstes Spannungsversorgungsmittel 1 und ein zweites Spannungsversorgungsmittel 2 auf, deren Ausgänge A₁, A₂ in Reihe geschaltet sind. Aufgrund der Reihenschaltung des Ausgangs A₁ des ersten Spannungsversorgungsmittels 1 und des Ausgangs A₂ des zweiten Spannungsversorgungsmittels 2 fällt am Ausgang A der Vorrichtung eine Vorrichtung Uₐ ab, die der Summe der Ausgangsspannung Uₐ₁ des ersten Spannungsversorgungsmittels 1 und der Ausgangsspannung Uₐ₂ des zweiten Spannungsversorgungsmittels 2 entspricht.

Das erste Spannungsversorgungsmittel ist dabei so gestaltet, dass es eine konstante Leerlaufspannung hat. Im Unterschied dazu ist die Leerlaufspannung des zweiten Spannungsversorgungsmittels einstellbar. Daraus ergibt sich, dass die Ausgangsspannung Uₐ der gesamten Vorrichtung ebenfalls einstellbar ist, wobei sich der Stellbereich der Vorrichtung aus dem Stellbereich des zweiten Spannungsversorgungsmittels ergibt. Die Einstellbarkeit des zweiten Spannungsversorgungsmittels wird dabei durch einen Leistungssteller 5 des zweiten Spannungsversorgungsmittels 2 erreicht. In der Fig. 1 und auch in der Fig. 2 ist dazu ein Leistungssteller 5 einer üblichen Art und Weise dargestellt. Grundsätzlich ist ja auch jede andere Topologie eines Leistungsstellers denkbar.

Das erste Spannungsversorgungsmittel 1 umfasst einen Transformator 7, der mit seiner Sekundärseite S₇ an den Ausgang A₁ des ersten Spannungsversorgungsmittels 1 angeschlossen ist. Die Primärseite P₇ des Transformators 7 ist dagegen unmittelbar über Leitungen 19, die ebenfalls Teil des ersten Spannungsversorgungsmittels 1 sind, mit dem Eingang E₁ des ersten Spannungsversorgungsmittel 1 verbunden. Der Eingang E₁ des ersten Spannungsversorgungsmittels ist darüber hinaus mit dem Eingang E der Vorrichtung verbunden.

Das zweite Spannungsversorgungsmittel 2 weist ebenfalls einen Transformator 8 auf. Dieser Transformator 8 ist mit seiner Sekundärseite S₈ mit Ausgang A₂ des zweiten Spannungsversorgungsmittels 2 verbunden. Die Primärseite P₈ hingegen ist mit dem ersten und dem zweiten Anschluss 51, 52 des ersten Leistungsstellers 5 verbunden. Der Leistungssteller 5 weist einen Freilaufzweig zwischen den beiden Anschlüssen 51, 52 auf, der eine einstellbare Induktivität 15 und zwei Bipolartransistoren 13 aufweist, die auf bekannte Art und Weise miteinander verschaltet sind. Die Basis jedes dieser beiden Bipolartransistoren 13 ist mit einem Steuerelement 14 verbunden. Der Anschluss 51 des Ausgangs des Leistungsstellers 5 ist über in bekannter Art und Weise verschaltete Bipolartransistoren 12 mit dem einen Anschluss des Eingangs E₅ verbunden. Der andere Anschluss des Eingangs E₅ des Leistungsstellers ist unter Zwischenschaltung eines Stromwandlers 18 mit dem Anschluss 52 des Ausgangs des Leistungsstellers 5 verbunden. Jede Basis der Bipolartransistoren 12 ist im Übrigen ebenfalls mit dem Steuerelement 14 verbunden. Das Steuerelement 14 ist ferner mit dem Stromwandler 18 verbunden und weist auch Anschlüsse für eine Betriebsspannung auf. Der Eingang E₅ des Leistungsstellers 5 ist an den Ausgang eines Netzfilters 9 angeschlossen, welcher Induktivitäten 16 und Kapazitäten 17 aufweist. Der Eingang des Netzfilters 9 bildet den Eingang des zweiten Spannungsversorgungsmittels 2.

Der Leistungssteller 5 des zweiten Spannungsversorgungsmittels 2 kann so angesteuert sein, dass er beispielsweise einen Stellbereich hat, der am Ausgang des zweiten Spannungsversorgungsmittels 2 eine Spannung Uₐ₂ in einem Bereich von 0 bis 20 % der Ausgangsspannung Uₐ der Vorrichtung umfasst. Damit kann bei einer maximalen möglichen Ausgangsspannung von 100 % eine Spannung zwischen 80 und 100 % der maximalen Ausgangsspannung der Vorrichtung eingestellt werden. Dabei entfallen immer 80 % der Ausgangsspannung Uₐ₁ auf das erste Spannungsversorgungsmittel, während der einstellbare Bereich zwischen 80 und 100 % der maximalen Ausgangsspannung der Vorrichtung von dem zweiten Spannungsversorgungsmittel zur Verfügung gestellt wird.

Die Funktion der erfindungsgemäßen Vorrichtung kann darüber hinaus durch eines der beiden ersten Schaltmittel 10 oder zweiten Schaltmittel 11 erweitert werden, welche in einer Leitung 19 oder zwischen den beiden Leitungen 19 geschaltet werden können. Durch ein Öffnen des ersten Schaltmittels 10 wird dabei die Primärseite P₇ des Transformators 7 des ersten Spannungsversorgungsmittels 1 stromlos geschaltet, worauf die Ausgangsspannung Uₐ₁ auf der Sekundärseite S₇ und somit am Ausgang des ersten Spannungsversorgungsmittels A₁ zusammenbricht. Durch ein Schliessen des zweiten Schaltmittels 11 kann die Primärseite P₇ des Transformators 7 des ersten Spannungsversorgungsmittels 1 kurzgeschlossen werden, worauf ebenfalls die Spannung auf der Sekundärseite S₇ des Transformators 7 des ersten Spannungsversorgungsmittels 7 zusammenbricht. Durch eines der Schaltmittel 10, 11 kann somit erreicht werden, dass die Ausgangsspannung Uₐ der gesamten Vorrichtung lediglich von dem zweiten Spannungsversorgungsmittel 2 zur Verfügung gestellt wird. Die Ausgangsspannung Uₐ der Vorrichtung entspricht dann der Ausgangsspannung Uₐ₂ des zweiten Spannungsversorgungsmittels. Im vorliegenden Beispiel kann dann als Ausgangsspannung Uₐ eine Spannung von 0 bis 20 % der maximalen Ausgangsspannung der Vorrichtung zur Verfügung gestellt werden.

Das in Fig. 2 dargestellte Ausführungsbeispiel einer erfindungsgemäßen Vorrichtung ist hinsichtlich des ersten Spannungsversorgungsmittels 1 genauso ausgebildet, wie das Ausführungsbeispiel gemäß Fig. 1. Unterschiede zwischen den beiden erfindungsgemäßen Vorrichtungen gemäß Fig. 1 und 2 liegen in dem zweiten Spannungsversorgungsmittel und hier insbesondere im Transformator 8 des zweiten Spannungsversorgungsmittels 2 und in einem zusätzlichen (zweiten) Leistungssteller 6. Der Netzfilter 9 und der erste Leistungssteller 2 sind genauso ausgebildet, wie die entsprechenden Baugruppen der erfindungsgemäßen Vorrichtung gemäß Fig. 1.

Der zweite Leistungssteller 6 unterscheidet sich in der Topologie und in seinen Bauelementen nicht von dem ersten Leistungssteller 2 des zweiten Spannungsversorgungsmittels 2. Der zweiten Leistungssteller 6 ist jedoch mit seinem Eingang E₆ in umgekehrter Polung an den Ausgang des Netzfilters 9 angeschlossen. Durch die umgekehrte Polung erzeugt der zweite Leistungssteller 6 an seinem Ausgang eine Spannung die um 180° gegenüber der Ausgangsspannung des ersten Leistungsstellers 5 phasenverschoben ist. Der eine Anschluss des Eingangs E₅ des ersten Leistungsstellers 5 und der andere Anschluss des Eingangs E₆ des zweiten Leistungsstellers 6 liegen auf einem gleichen Potential. Ebenso liegen der zweite Anschluss 52 des Ausgangs des ersten Leistungsstellers 5 und der erste Anschluss 61 des zweiten Leistungsstellers 6 auf einem gemeinsamen Potential. Außerdem liegen der andere Anschluss des Eingangs E₅ des ersten Leistungsstellers 5 und der eine Anschluss des Eingangs E₆ des zweiten Leistungsstellers 6 auf gemeinsamen Potential. Der erste Anschluss 51 des ersten Leistungsstellers 5 und der zweite Anschluss 62 des Ausgangs des zweiten Leistungsstellers 6 liegen dagegen auf unterschiedlichem Potential.

Der Transformator 8 des zweiten Spannungsversorgungsmittels 2 weist primärseitig neben äußeren Anzapfungen 81, 83 eine Mittelanzapfung 82 auf. Diese Mittelanzapfung 82 der Primärseite P₈ des Transformators 8 des zweiten Spannungsversorgungsmittels 2 ist mit dem zweiten Anschluss 52 des Leistungsstellers 5 und dem ersten Anschluss 61 des zweiten Leistungsstellers 6 verbunden. Die äußere Anzapfung 81 ist dagegen mit dem ersten Anschluss 51 des ersten Leistungsstellers 5 verbunden, während der zweite Anschluss 62 des Ausgangs des zweiten Leistungsstellers 6 mit der anderen äußeren Anzapfung 83 der Primärseite P₈ des Transformators 8 des zweiten Spannungsversorgungsmittels verbunden ist. Bezüglich der Sekundärseite S₈ ist der Transformator 8 der Vorrichtung gemäß Fig. 2 genauso geschaltet wie der Transformator 8 der Vorrichtung gemäß Fig. 1.

Dadurch dass der zweite Leistungssteller 6 Spannungen erzeugt, die gegenüber der Ausgangsspannung des ersten Leistungsstellers 5 um 180° phasenverschoben sind, ist die Ausgangsspannung am Ausgang des zweiten Leistungsstellers 6 auch um 180° phasenverschoben gegenüber der Ausgangsspannung des ersten Spannungsversorgungsmittels 1. Wird das zweite Spannungsversorgungsmittel 2 nun so betrieben, dass nur der zweite Leistungssteller 6 eine Spannung erzeugt, während die Ausgangsspannung am ersten Leistungssteller 5 gleich Null ist, wird aufgrund der Phasenverschiebung am Ausgang der Vorrichtung eine Ausgangsspannung Uₐ zur Verfügung gestellt, die kleiner ist als die Ausgangsspannung Uₐ₁ des ersten Spannungsversorgungsmittels. Aufgrund der Phasenverschiebung wird nämlich der Betrag der Ausgangsspannung Uₐ₂ am zweiten Spannungsversorgungsmittel von dem Betrag der Ausgangsspannung Uₐ₁ am ersten Spannungsversorgungsmittel abgezogen.

Durch eine entsprechende Ansteuerung des ersten beziehungsweise zweiten Leistungsstellers 5, 6 kann somit die Spannung Uₐ am Ausgang A der Vorrichtung bezogen auf die Ausgangsspannung Uₐ₁ des ersten Spannungsversorgungsmittels 1 vergrößert oder verringert werden. Wird nur der erste Leistungssteller 5 betrieben, wird die Spannung Uₐ am Ausgang A der Vorrichtung bezüglich der Spannung Uₐ₁ des ersten Spannungsversorgungsmittels 1 vergrößert; wird dagegen nur der zweite Leistungssteller 6 betrieben, wird die Ausgangsspannung Uₐ der erfindungsgemäßen Vorrichtung bezüglich der Ausgangsspannung Uₐ₁ des ersten Spannungsversorgungsmittels 1 verringert. Durch die in Fig. 2 erfindungsgemäße Vorrichtung kann dadurch ein größerer Stellbereich für die Einstellung der Ausgangsspannung Uₐ der Vorrichtung abgedeckt werden.

Sofern eines der Schaltmittel 10, 11, wie in Fig. 2 angedeutet, geöffnet ist, können bei einem Betrieb des zweiten Leistungsstellers 6 auch negative Spannungen am Ausgang der Vorrichtung zur Verfügung gestellt werden. Bei einer geschickten Auswahl der durch das erste Spannungsversorgungsmittel zur Verfügung gestellten Spannung von 66 % der maximalen Ausgangsspannung der Vorrichtung und einem Stellbereich von -33 % bis +33 % der maximalen Ausgangsspannung der Vorrichtung am zweiten Spannungsversorgungsmittel 2 können am Ausgang A der erfindungsgemäßen Vorrichtung Spannungen Uₐ von einer Größe von 0 % bis 100 % der maximalen Ausgangsspannung der Vorrichtung zur Verfügung gestellt werden. Im Stellbereich zwischen 0 und +33 % der maximalen Ausgangsspannung ist eines der Schaltmittel 10 oder 11 geöffnet, während nur der erste Leistungssteller 5 betrieben wird. Im Stellbereich zwischen 33 und 66 % wird das erste Spannungsversorgungsmittel 1 betrieben und gleichzeitig nur der zweite Leistungssteller 6. Im Bereich zwischen 66 und 100 % der maximalen Ausgangsspannung wird schließlich das erste Spannungsversorgungsmittel 1 und nur der erste Leistungssteller 5 des zweiten Spannungsversorgungsmittels 2 betrieben, um die gewünschte Ausgangsspannung Uₐ am Ausgang A der Vorrichtung zu erzeugen.

## Patentansprüche

1. Vorrichtung zum Stellen von Wechselstrom mit einem ersten Spannungsversorgungsmittel (1), einem zweiten Spannungsversorgungsmittel (2) und einem ersten Leistungssteller (5), wobei die Ausgänge (A₁, A₂) des ersten Spannungsversorgungsmittels (1) und des zweiten Spannungsversorgungsmittels (2) in Reihe geschaltet sind,
**dadurch gekennzeichnet, dass**
das zweite Spannungsversorgungsmittel (2) den ersten Leistungssteller (5) zum Einstellen der Spannung umfasst, dass das erste Spannungsversorgungsmittel (1) einen Transformator (7) umfasst und dass die Primärseite (P₇) des Transformators (7) des ersten Spannungsversorgungsmittels (1) mit dem Eingang (E) der Vorrichtung verbunden ist.

2. Vorrichtung nach Anspruch 1, **dadurch gekennzeichnet, dass** das zweite Spannungsversorgungsmittel (2) einen Transformator (8) umfasst.

3. Vorrichtung nach Anspruch 2, **dadurch gekennzeichnet, dass** die Sekundärseite (S₇, S₈) der Transformatoren (7, 8) mit den Ausgängen (A₁, A₂) der Spannungsversorgungsmittel (1, 2) verbunden sind.

4. Vorrichtung nach einem der Ansprüche 2 bis 3, **dadurch gekennzeichnet, dass** ein erster Anschluss (81) und ein zweiter Anschluss (82) der Primärseite (P₈) des Transformators (8) des zweiten Spannungsversorgungsmittels (2) mit zwei Anschlüssen (51, 52) des Ausgangs (A₅) des ersten Leistungsstellers (5) verbunden sind.

5. Vorrichtung nach Anspruch 4, **dadurch gekennzeichnet, dass** die Vorrichtung ein Schaltmittel zum Umpolen der Verbindung zwischen der Primärseite des Transformators (8) des zweiten Spannungsversorgungsmittels (2) und dem Ausgang des ersten Leistungsstellers (5) aufweist.

6. Vorrichtung nach einem der Ansprüche 1 bis 5, **dadurch gekennzeichnet, dass** das zweite Spannungsversorgungsmittel (2) einen Netzfilter (9) umfasst.

7. Vorrichtung nach einem der Ansprüche 1 bis 6, **dadurch gekennzeichnet, dass** der Eingang (E₅) des ersten Leistungsstellers (5) mit dem Ausgang des Netzfilters verbunden ist.

8. Vorrichtung nach einem der Ansprüche 1 bis 7, **dadurch gekennzeichnet, dass** das erste Spannungsversorgungsmittel (1) ein erstes Schaltmittel (10) aufweist, mit welchem die Primärseite (P₇) des Transformators (7) des ersten Spannungsversorgungsmittels (1) stromfrei schaltbar ist.

9. Vorrichtung nach einem der Ansprüche 1 bis 8, **dadurch gekennzeichnet, dass** das erste Spannungsversorgungsmittel (1) ein zweites Schaltmittel (11) aufweist, mit welchem die Primärseite (P₇) des Transformators (7) des ersten Spannungsversorgungsmittels (1) spannungsfrei schaltbar ist.

10. Vorrichtung nach einem der vorhergehenden Ansprüche, **dadurch gekennzeichnet, dass** das zweite Spannungsversorgungsmittel (2) einen zweiten Leistungssteller (6) aufweist.

11. Vorrichtung nach Anspruch 10, **dadurch gekennzeichnet, dass** der Eingang (E₆) des zweiten Leistungsstellers (6) mit dem Ausgang des Netzfilters verbunden ist.

12. Vorrichtung nach Anspruch 11, **dadurch gekennzeichnet, dass** der Eingang (E₆) des zweiten Leistungsstellers (6) im umgekehrten Sinn wie der Eingang (E₅) des ersten Leistungsstellers (5) gepolt ist.

13. Vorrichtung nach einem der Ansprüche 10 bis 12, **dadurch gekennzeichnet, dass** die Anschlüsse (61, 62) des Ausgangs (A₆) des zweiten Leistungsstellers (6) mit dem zweiten Anschluss (82) und einem dritten Anschluss (83) der Primärseite (P₈) des Transformators (8) des zweiten Spannungsversorgungsmittels (2) verbunden sind.

14. Vorrichtung nach Anspruch 13, **dadurch gekennzeichnet, dass** der zweite Anschluss (82) der Primärseite (P₈) des Transformators (8) des zweiten Spannungsversorgungsmittels (2) eine Mittelanzapfung dieses Transformators (8) ist.

15. Vorrichtung nach Anspruch 12 oder 13, **dadurch gekennzeichnet, dass** der erste Anschluss (81) und der dritte Anschluss (83) des Transformators (8) des zweiten Spannungsversorgungsmittels (2) äußere Anzapfungen dieses Transformators (8) sind.

16. Vorrichtung nach einen der vorhergehenden Ansprüche, **dadurch gekennzeichnet, dass** der Stellbereich des ersten Leistungsstellers (5) 0% bis 50% der Ausgangsspannung (Uₐ₁) des ersten Spannungsversorgungsmittels (1) beträgt.

17. Vorrichtung nach einem der Ansprüche 10 bis 16, **dadurch gekennzeichnet, dass** der Stellbereich des zweiten Leistungsstellers (6) -50% bis 0% der Ausgangsspannung (Uₐ₁) des ersten Spannungsversorgungsmittels (1) beträgt.

## Claims

1. Device for controlling alternating current comprising a first voltage supply means (1), a second voltage supply means (2) and a first power controller (5), the outputs (A₁, A₂) of the first voltage supply means (1) and the second voltage supply means (2) being connected in series, **characterized in that** the second voltage supply means (2) comprises the first power controller (5) for adjusting the voltage, **in that** the first voltage supply means (1) comprises a transformer (7), and **in that** the primary side (P₇) of the transformer (7) of the first voltage supply means (1) is connected to the input (E) of the device.

2. Device according to Claim 1, **characterized in that** the second voltage supply means (2) comprises a transformer (8).

3. Device according to Claim 2, **characterized in that** the secondary side (S₇, S₈) of the transformers (7, 8) are connected to the outputs (A₁, A₂) of the voltage supply means (1, 2).

4. Device according to either of Claims 2 and 3, **characterized in that** a first terminal (81) and a second terminal (82) on the primary side (P₈) of the transformer (8) of the second voltage supply means (2) are connected to two terminals (51, 52) of the output (A₅) of the first power controller (5).

5. Device according to Claim 4, **characterized in that** the device has a switching means for reversing the polarity of the connection between the primary side of the transformer (8) of the second voltage supply means (2) and the output of the first power controller (5).

6. Device according to one of Claims 1 to 5, **characterized in that** the second voltage supply means (2) comprises a line filter (9).

7. Device according to one of Claims 1 to 6, **characterized in that** the input (E₅) of the first power controller (5) is connected to the output of the line filter.

8. Device according to one of Claims 1 to 7, **characterized in that** the first voltage supply means (1) has a first switching means (10), by means of which the primary side (P₇) of the transformer (7) of the first voltage supply means (1) can be switched in current-free fashion.

9. Device according to one of Claims 1 to 8, **characterized in that** the first voltage supply means (1) has a second switching means (11), by means of which the primary side (P₇) of the transformer (7) of the first voltage supply means (1) can be switched in voltage-free fashion.

10. Device according to one of the preceding claims, **characterized in that** the second voltage supply means (2) has a second power controller (6).

11. Device according to Claim 10, **characterized in that** the input (E₆) of the second power controller (6) is connected to the output of the line filter.

12. Device according to Claim 11, **characterized in that** the input (E₆) of the second power controller (6) has the reverse polarity to the input (E₅) of the first power controller (5).

13. Device according to one of Claims 10 to 12, **characterized in that** the terminals (61, 62) of the output (A₆) of the second power controller (6) are connected to the second terminal (82) and a third terminal (83) on the primary side (P₈) of the transformer (8) of the second voltage supply means (2).

14. Device according to Claim 13, **characterized in that** the second terminal (82) on the primary side (P₈) of the transformer (8) of the second voltage supply means (2) is a centre tap of this transformer (8).

15. Device according to Claim 12 or 13, **characterized in that** the first terminal (81) and the third terminal (83) of the transformer (8) of the second voltage supply means (2) are outer taps of this transformer (8).

16. Device according to one of the preceding claims, **characterized in that** the control range of the first power controller (5) is 0% to 50% of the output voltage (Uₐ₁) of the first voltage supply means (1).

17. Device according to one of Claims 10 to 16, **characterized in that** the control range of the second power controller (6) is -50% to 0% of the output voltage (Uₐ₁) of the first voltage supply means (1).

## Revendications

1. Dispositif pour régler un courant alternatif comprenant des premiers moyens d'alimentation électrique (1), des deuxièmes moyens d'alimentation électrique (2) et un premier élément de réglage de puissance (5), les sorties (A₁, A₂) des premiers moyens d'alimentation électrique (1) et des deuxièmes moyens d'alimentation électrique (2) étant branchées en série,
**caractérisé en ce que**
les deuxièmes moyens d'alimentation électrique (2) comprennent le premier élément de réglage de puissance (5) pour régler la tension, **en ce que** les premiers moyens d'alimentation électrique (1) comprennent un transformateur (7) et **en ce que** le côté primaire (P₇) du transformateur (7) des premiers moyens d'alimentation électrique (1) est relié à l'entrée (E) du dispositif.

2. Dispositif selon la revendication 1, **caractérisé en ce que** les deuxièmes moyens d'alimentation électrique (2) comprennent un transformateur (8).

3. Dispositif selon la revendication 2, **caractérisé en ce que** les côtés secondaires (S₇, S₈) des transformateurs (7, 8) sont reliés aux sorties (A₁, A₂) des moyens d'alimentation électrique (1, 2).

4. Dispositif selon l'une des revendications 2 à 3, **caractérisé en ce que** la première borne (81) et une deuxième borne (82) du côté primaire (P₈) du transformateur (8) des deuxièmes moyens d'alimentation électrique (2) sont reliées à deux bornes (51, 52) de la sortie (A₅) du premier élément de réglage de puissance (5).

5. Dispositif selon la revendication 4, **caractérisé en ce que** le dispositif présente des moyens de commutation pour inverser la polarité de la liaison entre le côté primaire du transformateur (8) des deuxièmes moyens d'alimentation électrique (2) et la sortie du premier élément de réglage de puissance (5).

6. Dispositif selon l'une des revendications 1 à 5, **caractérisé en ce que** les deuxièmes moyens d'alimentation électrique (2) comprennent un filtre secteur (9).

7. Dispositif selon l'une des revendications 1 à 6, **caractérisé en ce que** l'entrée (E₅) du premier élément de réglage de puissance (5) est reliée à la sortie du filtre secteur.

8. Dispositif selon l'une des revendications 1 à 7, **caractérisé en ce que** les premiers moyens d'alimentation électrique (1) présentent des premiers moyens de commutation (10) avec lesquels le côté primaire (P₇) du transformateur (7) des premiers moyens d'alimentation électrique (1) peut être mis hors courant.

9. Dispositif selon l'une des revendications 1 à 8, **caractérisé en ce que** les premiers moyens d'alimentation électrique (1) présentent des deuxièmes moyens de commutation (11) avec lesquels le côté primaire (P₇) du transformateur (7) des premiers moyens d'alimentation électrique (1) peut être mis hors tension.

10. Dispositif selon l'une des revendications précédentes, **caractérisé en ce que** les deuxièmes moyens d'alimentation électrique (2) présentent un deuxième élément de réglage de puissance (6).

11. Dispositif selon la revendication 10, **caractérisé en ce que** l'entrée (E₆) du deuxième élément de réglage de puissance (6) est reliée à la sortie du filtre secteur.

12. Dispositif selon la revendication 11, **caractérisé en ce que** l'entrée (E₆) du deuxième élément de réglage de puissance (6) est polarisée à l'inverse de l'entrée (E₅) du premier élément de réglage de puissance (5).

13. Dispositif selon l'une des revendications 10 à 12, **caractérisé en ce que** les bornes (61, 62) de la sortie (A₆) du deuxième élément de réglage de puissance (6) sont reliées à la deuxième borne (82) et une troisième borne (83) du côté primaire (P₈) du transformateur (8) des deuxièmes moyens d'alimentation électrique (2).

14. Dispositif selon la revendication 13, **caractérisé en ce que** la deuxième borne (82) du côté primaire (P₈) du transformateur (8) des deuxièmes moyens d'alimentation électrique (2) est une prise de prélèvement centrale de ce transformateur (8).

15. Dispositif selon la revendication 12 ou 13, **caractérisé en ce que** la première borne (81) et la troisième borne (83) du transformateur (8) des deuxièmes moyens d'alimentation électrique (2) sont les prises de prélèvement extérieurs de ce transformateur (8).

16. Dispositif selon l'une des revendications précédentes, **caractérisé en ce que** la plage de réglage du premier élément de réglage de puissance (5) est de 0 % à 50 % de la tension de sortie (Uₐ₁) des premiers moyens d'alimentation électrique (1).

17. Dispositif selon l'une des revendications 10 à 16, **caractérisé en ce que** la plage de réglage du deuxième élément de réglage de puissance (6) est de - 50 % à 0 % de la tension de sortie (Uₐ₁) des premiers moyens d'alimentation électrique (1).
